# EUROPEAN PATENT SPECIFICATION

(11) **EP 4 582 276 B1**
(45) Date of publication and mention of the grant of the patent: **02.12.2026**
(21) Application number: 24221234.8
(22) Date of filing: 18.12.2024
(51) Int. Cl.: B60K 1/00

(54) **PLUG-IN HYBRID ELECTRIC VEHICLE**
STECKBARES HYBRIDELEKTROFAHRZEUG
VÉHICULE ÉLECTRIQUE HYBRIDE ENFICHABLE

(30) Priority: 04.01.2024 JP 2024000341
(43) Date of publication of application: 09.07.2025
(73) Proprietor: TOYOTA JIDOSHA KABUSHIKI KAISHA, Aichi-ken, 471-8571 (JP)
(72) Inventor: HARADA, Taku, Toyota-shi, 471-8571 (JP); SASAKI, Shoichi, Toyota-shi, 471-8571 (JP); KAWASHIMA, Takahiro, Toyota-shi, 471-8571 (JP); OHTA, Chikashi, Toyota-shi, 471-8571 (JP); TOMITA, Makoto, Toyota-shi, 471-8571 (JP)
(74) Representative: D Young & Co LLP

(56) References cited:
- JP-A- 2021 160 519
- US-A1- 2004 232 672
- US-A1- 2011 011 654
- US-A1- 2012 118 655
- US-A1- 2013 235 526
- US-A1- 2015 195 960

## Description

### BACKGROUND

### 1. Field

The present invention relates to a plug-in hybrid electric vehicle that can be connected to an external electrical power supply to charge its battery.

### 2. Description of Related Art

Japanese Laid-Open Patent Publication No. 2021-160519 discloses a structure for a hybrid electric vehicle, which includes an engine and a drive motor as its drive sources. In this vehicle, the battery, high-voltage components, and exhaust system components are compactly arranged beneath the floor panel.

A minivan-type vehicle is equipped with a sliding seat as the second-row seat and a sliding door. The sliding seat is capable of sliding along the floor in the vehicle's longitudinal direction. To ensure a sufficient sliding range for the sliding seat, long slide rails must be installed on the floor. Therefore, in a minivan-type vehicle, it is desirable for the floor behind the first-row seats to have a low, flat structure.

A plug-in hybrid electric vehicle, which can charge its battery by connecting to an external electrical power supply, requires a larger battery than a hybrid electric vehicle that does not have such a configuration.

Accordingly, in a minivan-type plug-in hybrid electric vehicle, it is necessary to examine the arrangement of high-voltage components that allows for both the installation of a large battery and a low, flat floor to ensure a spacious passenger compartment. JP2021160519A discloses a vehicle lower part structure.
US2013235526A1 discloses an electrical part fixing structure for hybrid vehicles.
US2012118655A1 discloses a vehicle electric equipment mounting structure.
US2015195960A1 discloses a wiring protective cover structure for electric drive vehicle.
US2011011654A1 discloses a hybrid vehicle.

### SUMMARY

This Summary is provided to introduce a selection of concepts in a simplified form that are further described below in the Detailed Description.

A plug-in hybrid electric vehicle of one aspect of the present invention is a minivan-type plug-in hybrid electric vehicle in which a passenger compartment and a cargo space are not separated by a partition. The plug-in hybrid electric vehicle includes power sources including an engine and a motor, a fuel tank configured to store fuel to be supplied to the engine, a battery configured to store electric power to be supplied to the motor, a high-voltage component configured to receive a high voltage, a vehicle on-board charger configured to charge the battery with power supplied from outside of the plug-in hybrid electric vehicle, a power transmission mechanism configured to transmit rotational power of the engine and the motor to front wheels, an inverter configured to drive the motor, an exhaust pipe configured to guide exhaust gas from the engine rearward in the vehicle front-rear direction, a first-row seat arranged on a floor panel that forms a floor surface of the passenger compartment, and a second-row seat disposed on the floor panel so as to be positioned rearward of the first-row seat in the vehicle front-rear direction. The engine, the motor, the power transmission mechanism, and the inverter are disposed in the engine compartment. In the vehicle front-rear direction, the first-row seat is positioned rearward of the front wheels, and the second-row seat is positioned forward of the rear wheels. The second-row seat is configured to be slidable on the floor panel in the vehicle front-rear direction. The battery, the fuel tank, and the exhaust pipe are disposed under the floor panel. The high-voltage component is disposed under the first-row seat and above the floor panel.

Other features and aspects will be apparent from the following detailed description, the drawings, and the claims.

### BRIEF DESCRIPTION OF THE DRAWINGS

Fig. 1 is a schematic diagram of a minivan-type plug-in hybrid electric vehicle according to an embodiment.
Fig. 2 is a plan view of a sliding door provided in the plug-in hybrid electric vehicle of Fig. 1.
Fig. 3 is a schematic diagram of an internal structure of the plug-in hybrid electric vehicle shown in Fig. 1.
Fig. 4 is a schematic diagram of an arrangement of seats in the plug-in hybrid electric vehicle shown in Fig. 1.
Fig. 5 is a schematic diagram of an arrangement of devices disposed on a floor panel in the plug-in hybrid electric vehicle shown in Fig. 1.
Fig. 6 is a schematic diagram of an arrangement of devices disposed under the floor panel in the plug-in hybrid electric vehicle shown in Fig. 1.
Fig. 7 is a schematic diagram of a configuration of a drive system and a configuration of an electric system in the plug-in hybrid electric vehicle shown in Fig. 1.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of acts and constructions that are well known to one of ordinary skill in the art may be omitted.

Exemplary embodiments may have different forms, and are not limited to the examples described. However, the examples described are thorough and complete, and convey the full scope of the invention as defined in the appended claims to one of ordinary skill in the art.

In this specification, "at least one of A and B" should be understood to mean "only A, only B, or both A and B."

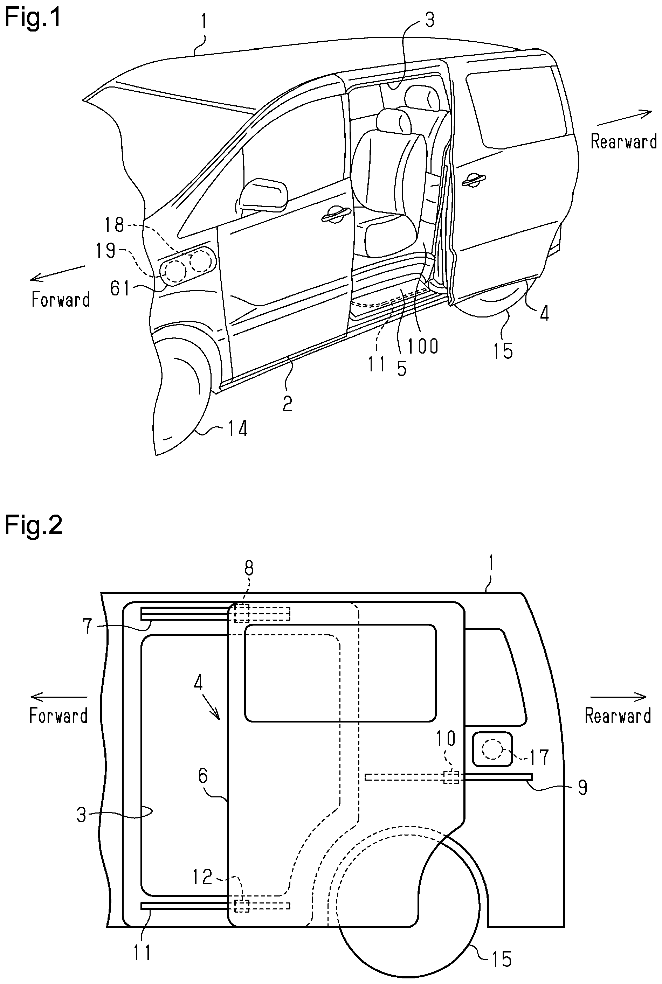

A plug-in hybrid electric vehicle 1 according to one embodiment will now be described with reference to Figs. 1 to 7. In the following description, terms related to orientations or directions, such as "front", "rear", "upper", "lower", "right", and "left", are defined based on the plug-in hybrid electric vehicle 1.

### External Structure of the Plug-In Hybrid Electric Vehicle 1

Fig. 1 is a schematic diagram of the plug-in hybrid electric vehicle 1 according to the present embodiment. The plug-in hybrid electric vehicle 1 has a left side surface, which is one of a first side surface and a second side surface, and a right side surface, which is the other of the first side surface and the second side surface. As shown in Fig. 1, the plug-in hybrid electric vehicle 1 includes a front door 2, an opening 3, and a sliding door 4, which are on the left side surface. Likewise, the plug-in hybrid electric vehicle 1 includes a front door 2, an opening 3, and a sliding door 4 on the right side surface. A charging lid 61 is disposed on the left side surface of the plug-in hybrid electric vehicle 1 and forward of the front door 2. A first charging port 18 and a second charging port 19, which will be discussed below, are disposed inside the charging lid 61.

The opening 3 is opened and closed by the sliding door 4, which moves in the vehicle front-rear direction. A step panel 5 is disposed in a lower portion of the opening 3. The step panel 5 is disposed below a floor panel 100, which forms a floor surface of the plug-in hybrid electric vehicle 1. A guide rail 11 extending in the vehicle front-rear direction is fixed to a lower surface of the step panel 5. A front end of the guide rail 11 is positioned rearward of a front wheel 14. A rear end of the guide rail 11 is positioned forward of a rear wheel 15.

As shown in Fig. 2, the fuel inlet 17 is disposed on the left side surface of the plug-in hybrid electric vehicle 1 and rearward of the sliding door 4. An upper rail 7, a center rail 9, and a guide rail 11 are disposed around the opening 3. The upper rail 7 is disposed above the opening 3. The guide rail 11 is disposed below the opening 3. The center rail 9 is disposed rearward of the opening 3 on the side surface of the vehicle 1. The position of the center rail 9 in the vehicle height direction is below the upper rail 7 and above the guide rail 11.

The sliding door 4 includes a sliding door body 6, an upper hinge unit 8, a center hinge unit 10, and a guide hinge unit 12. The upper hinge unit 8 and the guide hinge unit 12 are fixed to parts of the sliding door body 6 near the front end in a vehicle length direction. The center hinge unit 10 is fixed to a part of the sliding door body 6 near the rear end in the vehicle length direction. The vehicle length direction coincides with the vehicle front-rear direction.

The upper hinge unit 8 is fixed to an upper end portion of the sliding door body 6. The guide hinge unit 12 is fixed to a lower end portion of the sliding door body 6. The center hinge unit 10 is fixed to a central portion of the sliding door body 6 in the vertical direction.

The upper hinge unit 8 is movably supported by the upper rail 7. The center hinge unit 10 is movably supported by the center rail 9. The guide hinge unit 12 is movably supported by the guide rail 11. Thus, the upper hinge unit 8, the center hinge unit 10, and the guide hinge unit 12 connect the sliding door body 6 to the side surface of the vehicle 1. The upper hinge unit 8 moves along the upper rail 7. The center hinge unit 10 moves along the center rail 9. The guide hinge unit 12 moves along the guide rail 11. The sliding door body 6 thus moves relative to the side surface of the vehicle 1. The upper rail 7, the center rail 9, and the guide rail 11 define the moving direction of the sliding door 4.

### Internal Structure of the Plug-In Hybrid Electric Vehicle 1

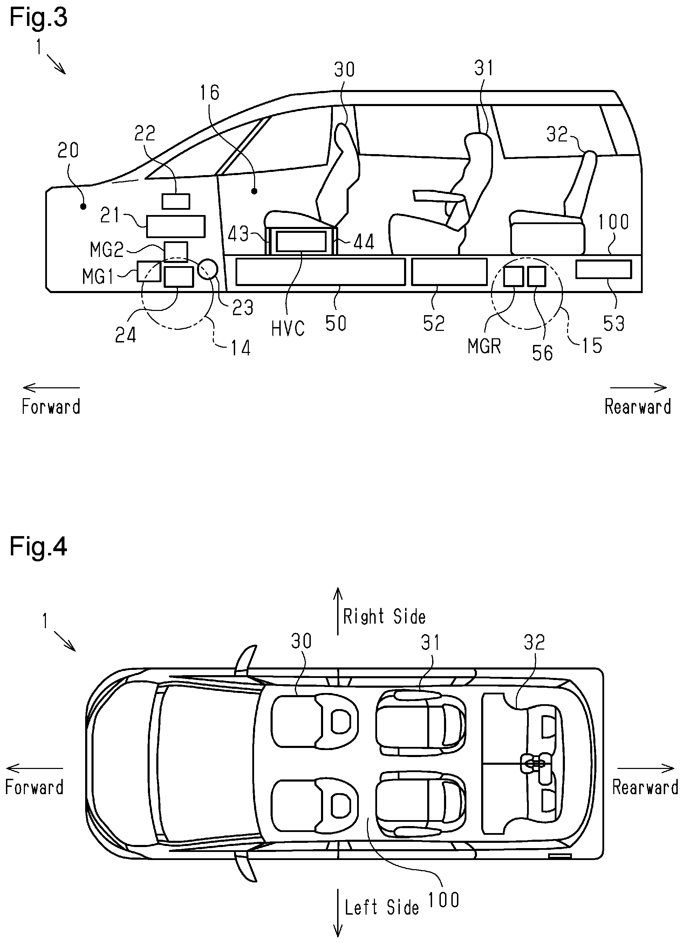

Fig. 3 is a side view schematically showing an internal structure of the plug-in hybrid electric vehicle 1. As shown in Fig. 3, the plug-in hybrid electric vehicle 1 is a minivan-type vehicle in which a passenger compartment 16 and a cargo space are not separated by a partition. The plug-in hybrid electric vehicle 1 includes an engine compartment 20 forward of the passenger compartment 16. The engine compartment 20 accommodates, as power sources, an engine 21, a first motor-generator MG1, a second motor-generator MG2, a power control unit 22, a power split mechanism 23, and a speed reduction mechanism 24.

First-row seats 30, second-row seats 31, and third-row seats 32 are disposed on the floor panel 100. The second-row seats 31 are positioned rearward of the first-row seats 30. In the vehicle side view, the first-row seats 30 are positioned rearward of the front wheels 14. In the vehicle side view, the second-row seats 31 are positioned forward of the rear wheel 15.

Fig. 4 is a plan view schematically showing the arrangement of the seats. As shown in Fig. 4, the first-row seats 30 include a driver's seat and a front passenger seat. The second-row seats 31 include two independent seats. The third-row seats 32 are positioned rearward of the second-row seats 31.

As shown in Fig. 3, high-voltage components HVC are disposed below the first-row seats 30 and above the floor panel 100. Details of the high-voltage components HVC will be described later.

The plug-in hybrid electric vehicle 1 includes a first cross member 43 and a second cross member 44 below the first-row seats 30 and above the floor panel 100. The first cross member 43 and the second cross member 44 are frame members extending in the vehicle width direction. The first cross member 43 is disposed forward of the high-voltage components HVC. The second cross member 44 is disposed rearward of the high-voltage components HVC. That is, the first cross member 43 and the second cross member 44 are disposed such that the high-voltage components HVC are located in between.

A battery 50, a fuel tank 52, a muffler 53, a rear-wheel drive motor-generator MGR, and a rear-wheel speed reduction mechanism 56 are disposed under the floor panel 100. The battery 50 is configured to store electric power to be supplied to the first motor-generator MG1, the second motor-generator MG2, and the rear-wheel drive motor-generator MGR. The fuel tank 52 is configured to store fuel to be supplied to the engine 21. The muffler 53 is configured to reduce exhaust noise.

The fuel tank 52 is disposed rearward of the battery 50. The rear-wheel drive motor-generator MGR is disposed rearward of the fuel tank 52. The muffler 53 is disposed rearward of the rear-wheel drive motor-generator MGR.

The high-voltage components HVC are disposed on the battery 50.

### Devices Disposed on the Floor Panel 100

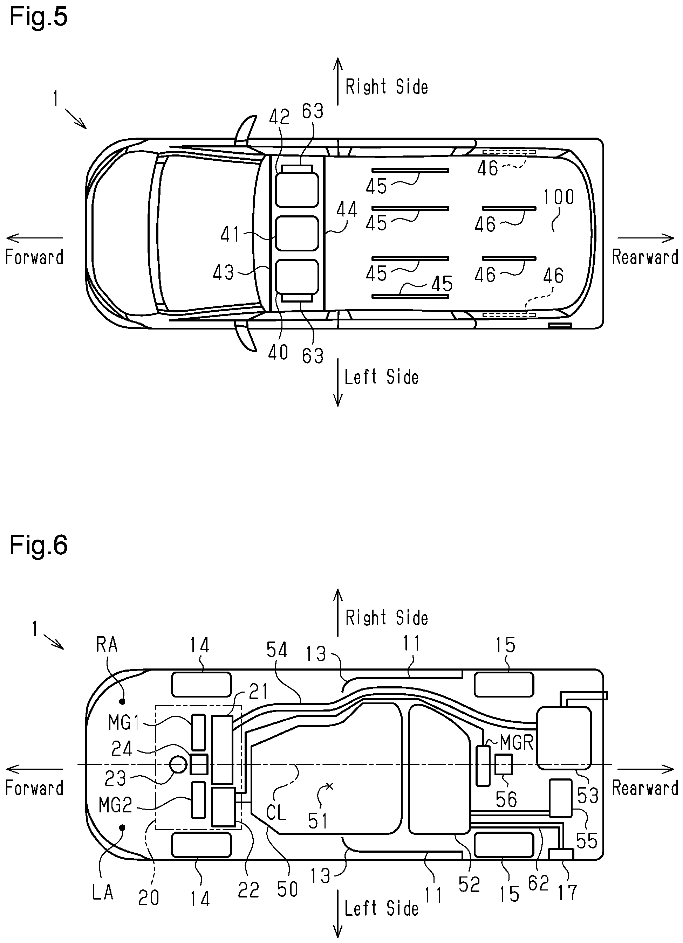

Fig. 5 is a plan view schematically showing the arrangement of devices disposed on the floor panel 100. As shown in Fig. 5, a vehicle on-board charger 40, a junction box 41, and a DC/DC converter 42 are disposed on the floor panel 100. The vehicle on-board charger 40, the junction box 41, and the DC/DC converter 42 are the high-voltage components HVC.

The vehicle on-board charger 40 includes a cooling air inlet 63. The DC/DC converter 42 also includes a cooling air inlet 63. The two cooling air inlets 63 each open outward in the vehicle width direction.

Four first slide rails 45 extending in the vehicle front-rear direction are disposed rearward of the high-voltage components HVC. Four second slide rails 46 extending in the vehicle front-rear direction are disposed rearward of the first slide rails 45. The first slide rails 45 are all disposed on the floor panel 100. Two of the four second slide rails 46 at the center in the vehicle width direction are disposed on the floor panel 100. The remaining two second slide rails 46 are disposed on the side surfaces of the vehicle 1 in the passenger compartment 16.

As shown in Fig. 4, the second-row seats 31 are disposed on the first slide rails 45. The second-row seats 31 are configured to be slidable in the vehicle front-rear direction along the first slide rails 45. The third-row seats 32 are disposed on the second slide rails 46. The third-row seats 32 are configured to be slidable in the vehicle front-rear direction along the second slide rails 46.

### Devices Disposed under the Floor Panel 100

Fig. 6 is a plan view schematically showing the arrangement of devices disposed under the floor panel 100. The plug-in hybrid electric vehicle 1 is divided into a right area RA and a left area LA with a center line CL, indicating the center in the vehicle width direction, serving as a boundary.

The battery 50 is disposed so as to extend over both the right area RA and the left area LA. The battery 50 is disposed closer to the left side of the vehicle 1 than to the right side. A center of gravity 51 of the battery 50 is positioned in the left area LA. That is, the battery 50 is offset in the vehicle width direction so that the center of gravity 51 of the battery 50 is displaced from the center line CL in the vehicle width direction.

The plug-in hybrid electric vehicle 1 includes the guide rails 11, which are located under the floor panel 100 and slidably support the sliding doors 4. The guide rails 11 are arranged so as to overlap with a part of the battery 50 in the vehicle front-rear direction. Each guide rail 11 includes a curved portion 13 that extends forward so as to curve inward in the vehicle width direction. When the sliding door 4 is closed, the sliding door 4 is pulled inward in the vehicle width direction along the curved portion 13 of the guide rail 11.

An exhaust pipe 54 configured to guide exhaust gas from the engine 21 rearward is disposed under the floor panel 100. The exhaust pipe 54 connects the engine 21 to the muffler 53. The exhaust pipe 54 is disposed closer to the right side of the vehicle 1 than to the left side. The exhaust pipe 54 is disposed in the right area RA of the vehicle 1. The exhaust pipe 54 is disposed toward the side opposite to the side toward which the battery 50 is disposed in the vehicle width direction. The exhaust pipe 54 is disposed between the battery 50 and the guide rail 11 in the vehicle width direction. The exhaust pipe 54 is bent outward in the vehicle width direction along the curved portion 13 of the corresponding guide rail 11.

The fuel tank 52 is disposed rearward of the battery 50. The fuel tank 52 is connected to the fuel inlet 17 via a fuel supply pipe 62.

A fuel vapor recovery device 55 is disposed rearward of the rear-wheel drive motor-generator MGR and to a side of the muffler 53 in the vehicle width direction. The fuel vapor recovery device 55 is a canister that adsorbs fuel vapor gas generated inside the fuel tank 52.

### Drive System of the Plug-In Hybrid Electric Vehicle 1

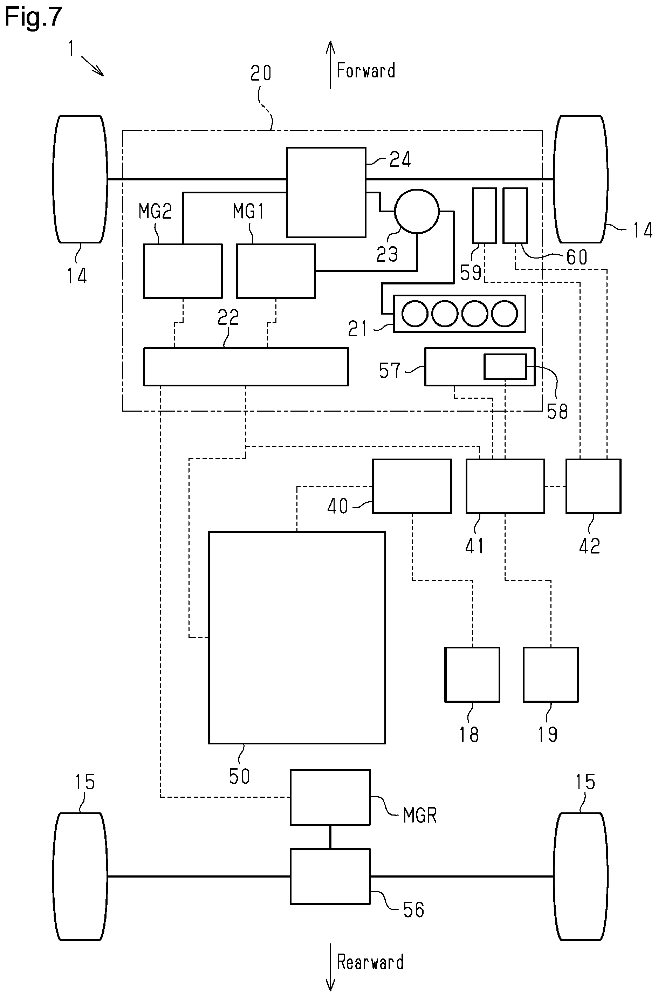

Fig. 7 schematically shows a configuration of a drive system and a configuration of an electric system in the plug-in hybrid electric vehicle 1 of the present embodiment.

As shown in Fig. 7, the second motor-generator MG2 is connected to the battery 50 via the power control unit 22. The second motor-generator MG2 is coupled to the front wheels 14 via the speed reduction mechanism 24. The rotational power of the second motor-generator MG2 is transmitted to the front wheels 14 via the speed reduction mechanism 24, which is a power transmission mechanism. In other words, the second motor-generator MG2 acts as a drive motor.

The engine 21 is connected to the front wheels 14 via the power split mechanism 23 and the speed reduction mechanism 24. Like the speed reduction mechanism 24, the power split mechanism 23 is also a power transmission mechanism. The rotational power of the engine 21 is transmitted to the front wheels 14 via the power transmission mechanisms. The first motor-generator MG1 is coupled to the power split mechanism 23. The first motor-generator MG1 is a three-phase AC motor-generator. The power split mechanism 23 is a planetary gear mechanism capable of splitting the driving force among the engine 21, the first motor-generator MG1, and the front wheels 14.

The first motor-generator MG1 generates electric power by receiving the driving force of the engine 21 and/or the driving force from the front wheels 14. The first motor-generator MG1 acts as a starter to drive the crankshaft, which is the output shaft of the engine 21, when initiating the engine 21. In this case, the first motor-generator MG1 acts as an electric motor that generates a driving force in response to supply of electric power from the battery 50. In other words, the first motor-generator MG1 acts as a drive motor.

The first motor-generator MG1 and the second motor-generator MG2 are connected to the battery 50 via the power control unit 22. AC power generated by the first motor-generator MG1 is converted into DC power by the power control unit 22, and the battery 50 is charged with the DC power. In other words, the power control unit 22 acts as an inverter.

The DC power of the battery 50 is converted into AC power by the power control unit 22, and supplied to the second motor-generator MG2. When the plug-in hybrid electric vehicle 1 is decelerated, the second motor-generator MG2 generates electric power using the driving force from the front wheels 14. The battery 50 is charged with the electric power generated by the second motor-generator MG2. In other words, the plug-in hybrid electric vehicle 1 performs charging through regenerative braking. In this case, the second motor-generator MG2 acts as a power generator. AC power generated by the second motor-generator MG2 is converted into DC power by the power control unit 22, and the battery 50 is charged with the DC power.

The rear-wheel drive motor-generator MGR is connected to the battery 50 via the power control unit 22. The rear-wheel drive motor-generator MGR is coupled to the rear wheels 15 via the rear-wheel speed reduction mechanism 56. The DC power of the battery 50 is converted into AC power by the power control unit 22, and supplied to the rear-wheel drive motor-generator MGR. The rear-wheel drive motor-generator MGR is an electric motor that drives the rear wheels 15 by using electric power supplied from the battery 50. In other words, the rear-wheel drive motor-generator MGR acts as a drive motor.

When the plug-in hybrid electric vehicle 1 is decelerated, the rear-wheel drive motor-generator MGR generates electric power using the driving force from the rear wheels 15. The battery 50 is charged with electric power generated by the rear-wheel drive motor-generator MGR. In this case, the rear-wheel drive motor-generator MGR acts as a generator. AC power generated by the rear-wheel drive motor-generator MGR is converted into DC power by the power control unit 22, and the battery 50 is charged with the DC power.

### Electric System of the Plug-In Hybrid Electric Vehicle 1

As shown in Fig. 7, the plug-in hybrid electric vehicle 1 includes the vehicle on-board charger 40, the junction box 41, and the DC/DC converter 42 as the high-voltage components HVC. Further, the plug-in hybrid electric vehicle 1 includes the first charging port 18 and the second charging port 19 as charging ports into which charging plugs are inserted from the outside of the vehicle 1. The first charging port 18 is used for standard charging, which is performed using an AC power supply such as 100 V or 200 V. The second charging port 19 is used for fast charging with a high-voltage DC power supply, such as 50 kW. As shown in Fig. 1, the first charging port 18 and the second charging port 19 are disposed on a side surface of the vehicle 1 and forward of the front door 2.

As shown in Fig. 7, the vehicle on-board charger 40 is connected to the battery 50 via a wire harness. The junction box 41 is connected to the battery 50 via a wire harness. The DC/DC converter 42 is connected to the junction box 41 via a wire harness.

The vehicle on-board charger 40 is connected to the first charging port 18 via a wire harness. The vehicle on-board charger 40 charges the battery 50 by converting AC power input from an AC power supply connected to the first charging port 18 into DC power and outputting the DC power. That is, the plug-in hybrid electric vehicle 1 can use an AC power supply as an external electrical power supply for charging the battery 50.

The junction box 41 has a feature of distributing electric power from the battery 50 to multiple devices. For example, DC power from the battery 50 is supplied to the DC/DC converter 42, the air conditioner 57, and the water heater 58 via the junction box 41.

The air conditioner 57 performs air conditioning of the passenger compartment 16 using the electric power supplied from the battery 50. The water heater 58 heats water into hot water using the electric power supplied from the battery 50 and uses the heated water as a heat source of the air conditioner 57.

The junction box 41 is connected to the second charging port 19 via a wire harness. A DC power supply is connected to the second charging port 19. The DC power input from the DC power supply connected to the second charging port 19 is supplied to the battery 50 via the junction box 41. That is, the plug-in hybrid electric vehicle 1 can use a DC power supply as an external electrical power supply for charging the battery 50.

The DC/DC converter 42 decreases the voltage of the battery 50 and supplies the decreased voltage to multiple auxiliary devices. The auxiliary devices include an electric power steering system 59 and an electric oil pump 60 disposed in the engine compartment 20. The electric power steering system 59 is a mechanism that assists the driver's steering operation. The electric oil pump 60 is a mechanism that draws lubricating oil and uses the lubricating oil to lubricate the engine 21.

### Operation of Present Embodiment

If the high-voltage components HVC are disposed under the floor panel 100, the battery 50 needs to be reduced in size to be disposed under the floor panel 100. Also, achieving a low floor design may become difficult. On the other hand, if the high-voltage components HVC are disposed above the floor panel 100, it is possible that a flat floor design cannot be achieved depending on the position at which the high-voltage components HVC are disposed.

In the present embodiment, since the high-voltage components HVC are disposed above the floor panel 100, it is possible to have a space for mounting a relatively large battery 50 under the floor panel 100 without raising the height of the floor panel 100. Further, since the high-voltage components HVC are disposed below the first-row seats 30, the floor on which the second-row seats 31 are disposed can be made flat.

### Advantages of the Present Embodiment

(1) The plug-in hybrid electric vehicle 1 has a relatively low and flat floor and a relatively large passenger compartment while allowing the large battery 50 to be mounted.
(2) The high-voltage components HVC mounted on the plug-in hybrid electric vehicle 1 are connected to the battery 50 via a wire harness. The high-voltage components HVC are disposed on the battery 50. The high-voltage components HVC include components that send and receive electric power to and from the battery 50 via wire harnesses. Since the high-voltage components HVC are disposed on the battery 50, relatively short wire harnesses can be used to connect the high-voltage components HVC and the battery 50 to each other. The use of relatively short wire harnesses reduces the weight of the above-described plug-in hybrid electric vehicle 1.
(3) The high-voltage components HVC include the vehicle on-board charger 40, the junction box 41 that distributes the current from the battery 50, and the DC/DC converter 42 that converts the voltage of the electric power supplied from the battery 50. The vehicle on-board charger 40, the junction box 41, and the DC/DC converter 42 are disposed above the battery 50 and under the first-row seats 30 in a state of being arranged in the vehicle width direction. The vehicle on-board charger 40 is connected to the battery 50 by a wire harness. The junction box 41 is connected to the battery 50 by a wire harness. The DC/DC converter 42 is connected to the junction box 41 by a wire harness. With this configuration, the high-voltage components HVC are consolidated, allowing for efficient connections between the high-voltage components HVC and the battery 50, as well as efficient interconnections among the high-voltage components HVC themselves.
(4) The high-voltage components HVC include the junction box 41. The junction box 41 is disposed on the battery 50. The wire harness that connects the junction box 41 to the battery 50 receives a relatively high voltage. Since the junction box 41 is disposed on the battery 50 in the above-described configuration, the wire harness connecting the junction box 41 to the battery 50 can be shortened. This reduces the power loss in the wire harness that connects the junction box 41 to the battery 50.
(5) The high-voltage components HVC include the DC/DC converter 42. The DC/DC converter 42 is disposed on the battery 50. The wire harness that connects the DC/DC converter 42 to the battery 50 receives a relatively high voltage. Since the DC/DC converter 42 is disposed on the battery 50 in the above-described configuration, the wire harness connecting the DC/DC converter 42 to the battery 50 can be shortened. This reduces the power loss in the wire harness that connects the DC/DC converter 42 to the battery 50.
(6) The high-voltage components HVC include the vehicle on-board charger 40. The vehicle on-board charger 40 is disposed on the battery 50. Since the vehicle on-board charger 40 is disposed on the battery 50 in the above-described configuration, the wire harness connecting the vehicle on-board charger 40 to the battery 50 can be shortened. This reduces the power loss in the wire harness that connects the vehicle on-board charger 40 to the battery 50.
(7) In the plug-in hybrid electric vehicle 1, the vehicle on-board charger 40 is disposed to the side of the junction box 41 in the vehicle width direction. The DC/DC converter 42 is disposed on a side of the junction box 41 that is opposite to the vehicle on-board charger 40 in the vehicle width direction. The DC/DC converter 42 is connected to the junction box 41 via a wire harness. Thus, if the DC/DC converter 42 is installed to the side of the junction box 41, the wire harness connecting the DC/DC converter 42 to the junction box 41 is shortened. Since the wire harness is shortened, the weight of the wire harness is reduced. This reduces the weight of the plug-in hybrid electric vehicle 1. Additionally, a shorter wire harness reduces power loss within the wire harness. Therefore, the above-described plug-in hybrid electric vehicle 1 reduces power loss in the wire harness that connects the DC/DC converter 42 to the junction box 41.
(8) The plug-in hybrid electric vehicle 1 includes the first cross member 43 and the second cross member 44, which extend in the vehicle width direction. The first cross member 43 is positioned forward of the high-voltage components HVC. The second cross member 44 is positioned rearward of the high-voltage components HVC. The first cross member 43 and the second cross member 44 are disposed such that the high-voltage components HVC are located in between. The high-voltage components HVC, which receive a high voltage, are preferably protected from impacts. In the above-described plug-in hybrid electric vehicle 1, the first cross member 43 and the second cross member 44 are respectively disposed forward of and rearward of the high-voltage components HVC, such that the high-voltage components HVC are positioned between the first cross member 43 and the second cross member 44. Thus, an impact from the front of the vehicle 1 is absorbed by the first cross member 43 before reaching the high-voltage components HVC. An impact from the rear of the vehicle 1 is absorbed by the second cross member 44 before reaching the high-voltage components HVC. In this manner, the above-described plug-in hybrid electric vehicle 1 can protect the high-voltage components HVC from impacts from the front and rear of the vehicle 1.
(9) In the plug-in hybrid electric vehicle 1, the high-voltage components HVC include the cooling air inlets 63. The cooling air inlets 63 of the high-voltage components HVC open outward in the vehicle width direction. If the cooling air inlets 63 open toward the front of the vehicle 1, an airflow is generated around the feet of occupants seated in the first-row seats 30. If the cooling air inlets 63 open toward the rear of the vehicle 1, an airflow is generated around the feet of occupants seated in the second-row seats 31. This airflow in either case may cause discomfort to the occupants. In the present embodiment, the likelihood of airflow being directed toward occupants' feet is reduced compared to a configuration in which the cooling air inlets 63 open toward the front or rear of the vehicle 1. Accordingly, the above-described plug-in hybrid electric vehicle 1 effectively cools the high-voltage components HVC while minimizing discomfort to occupants.
(10) In the plug-in hybrid electric vehicle 1, the vehicle on-board charger 40 and the DC/DC converter 42 include the cooling air inlets 63. The cooling air inlet 63 of the vehicle on-board charger 40 and the cooling air inlet 63 of the DC/DC converter 42 both open outward in the vehicle width direction. The vehicle on-board charger 40 and the DC/DC converter 42 generate a larger amount of heat than the junction box 41. In the present embodiment, the vehicle on-board charger 40 and the DC/DC converter 42, which generate a large amount of heat, are efficiently cooled.

### Modifications

The above-described embodiment may be modified as follows. The above-described embodiment and the following modifications can be combined as long as the combined modifications remain technically consistent with each other.

The high-voltage components HVC may be disposed at a position that is not above the battery 50 as long as the high-voltage components HVC are disposed below the first-row seats 30 and above the floor panel 100. That is, the battery 50 does not necessarily need to be disposed below the high-voltage components HVC.

The plug-in hybrid electric vehicle 1 does not necessarily need to include the junction box 41. For example, if the battery 50 has a feature of distributing current, the plug-in hybrid electric vehicle 1 does not necessarily need to include the junction box 41.

The vehicle on-board charger 40 may be disposed between the junction box 41 and the DC/DC converter 42.

The high-voltage components HVC do not necessarily need to be connected to the battery 50 by wire harnesses. For example, the high-voltage components HVC may be connected to the battery 50 by a bus bar.

The DC/DC converter 42 does not necessarily need to be connected to the junction box 41 by a wire harness. For example, the DC/DC converter 42 may be connected to the junction box 41 by a bus bar.

The junction box 41, the DC/DC converter 42, and the vehicle on-board charger 40 do not necessarily need to be arranged in the vehicle width direction as long as the junction box 41, the DC/DC converter 42, and the vehicle on-board charger 40 are arranged below the first-row seats 30 and above the floor panel 100. For example, the junction box 41, the DC/DC converter 42, and the vehicle on-board charger 40 may be stacked in the height direction of the vehicle 1.

The plug-in hybrid electric vehicle 1 does not necessarily need to include the first cross member 43 at a position forward of the high-voltage components HVC.

The plug-in hybrid electric vehicle 1 does not necessarily need to include the second cross member 44 at a position rearward of the high-voltage components HVC.

The plug-in hybrid electric vehicle 1 does not necessarily need to include any cross members.

The high-voltage components HVC do not necessarily need to be disposed between two cross members.

The high-voltage components HVC do not necessarily need to include the cooling air inlets 63.

The vehicle on-board charger 40 does not necessarily need to include the cooling air inlet 63.

The DC/DC converter 42 does not necessarily need to include the cooling air inlet 63.

The cooling air inlets 63 provided in the vehicle on-board charger 40 and the DC/DC converter 42 do not necessarily need to be directed outward in the vehicle width direction. For example, each cooling air inlet 63 may open toward the front of the vehicle 1. Alternatively, each cooling air inlet 63 may open toward the rear of the vehicle 1.

Various changes in form and details may be made to the examples above without departing from the scope of the claims. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components. The scope of the invention is not defined by the detailed description, but by the claims. All variations within the scope of the claims are included in the invention.

## Claims

1. A minivan-type plug-in hybrid electric vehicle (1) in which a passenger compartment (16) and a cargo space are not separated by a partition, the vehicle (1) comprising:
an engine compartment (20) provided in front of the passenger compartment (16) in a vehicle front-rear direction;
power sources including an engine (21) and a motor (MG1, MG2);
a fuel tank (52) configured to store fuel to be supplied to the engine (21);
a battery (50) configured to store electric power to be supplied to the motor (MG1, MG2);
a high-voltage component (HVC) configured to receive a high voltage;
a vehicle on-board charger (40) configured to charge the battery (50) with power supplied from outside of the plug-in hybrid electric vehicle (1);
a power transmission mechanism (23, 24) configured to transmit rotational power of the engine (21) and the motor (MG1, MG2) to front wheels (14);
an inverter (22) configured to drive the motor (MG1, MG2);
an exhaust pipe (54) configured to guide exhaust gas from the engine (21) rearward in the vehicle front-rear direction;
a first-row seat (30) arranged on a floor panel (100) that forms a floor surface of the passenger compartment (16);
a second-row seat (31) disposed on the floor panel (100) so as to be positioned rearward of the first-row seat (30) in the vehicle front-rear direction; and
multiple cross members (43, 44) extending in a vehicle width direction, wherein
the engine (21), the motor (MG1, MG2), the power transmission mechanism (23, 24), and the inverter (22) are disposed in the engine compartment (20),
in the vehicle front-rear direction, the first-row seat (30) is positioned rearward of the front wheels (14), and the second-row seat (31) is positioned forward of the rear wheels (15),
the second-row seat (31) is configured to be slidable on the floor panel (100) in the vehicle front-rear direction,
the battery (50), the fuel tank (52), and the exhaust pipe (54) are disposed under the floor panel (100),
the high-voltage component (HVC) is disposed under the first-row seat (30) and above the floor panel (100), and
two of the cross members (43, 44) are respectively positioned forward of and rearward of the high-voltage component (HVC) in the vehicle front-rear direction such that the high-voltage components (HVC) are positioned between the two cross members (43, 44).

2. The plug-in hybrid electric vehicle (1) according to claim 1, wherein
the high-voltage component (HVC) is connected to the battery (50) via a wire harness, and
the high-voltage component (HVC) is disposed above the battery (50).

3. The plug-in hybrid electric vehicle (1) according to claim 2, wherein
the high-voltage component (HVC) includes:
a junction box (41) configured to distribute a current supplied from the battery (50);
a converter (42) configured to convert a voltage of electric power supplied from the battery (50); and
a vehicle on-board charger (40), and
the junction box (41), the converter (42), and the vehicle on-board charger (40) are disposed above the battery (50) and under the first-row seat (30) in a state of being arranged in a vehicle width direction.

4. The plug-in hybrid electric vehicle (1) according to claim 2, wherein the high-voltage component (HVC) includes a junction box (41) configured to distribute a current supplied from the battery (50).

5. The plug-in hybrid electric vehicle (1) according to claim 2, wherein
the high-voltage component (HVC) includes a converter (42) configured to convert a voltage of electric power supplied from the battery (50), and
the converter (42) is disposed above the battery (50).

6. The plug-in hybrid electric vehicle (1) according to claim 2, wherein
the high-voltage component (HVC) includes a vehicle on-board charger (40), and
the vehicle on-board charger (40) is disposed above the battery (50).

7. The plug-in hybrid electric vehicle (1) according to claim 3, wherein
the vehicle on-board charger (40) is disposed to a side of the junction box (41) in the vehicle width direction,
the converter (42) is disposed on a side of the junction box (41) that is opposite to the vehicle on-board charger (40) in the vehicle width direction, and
the converter (42) is connected to the junction box (41) by a wire harness.

8. The plug-in hybrid electric vehicle (1) according to claim 1, wherein
the high-voltage component (HVC) includes an air inlet (63) for cooling, and
the air inlet (63) opens outward in the vehicle width direction.

9. The plug-in hybrid electric vehicle (1) according to claim 7, wherein
the vehicle on-board charger (40) and the converter (42) each include an air inlet (63) for cooling, and
the air inlet (63) of the vehicle on-board charger (40) and the air inlet (63) of the converter (42) both open outward in the vehicle width direction.

## Patentansprüche

1. Plug-in-Hybridelektrofahrzeug (1) vom Typ Minivan, in dem ein Insassenraum (16) und ein Laderaum nicht durch eine Trennwand getrennt sind, wobei das Fahrzeug (1) Folgendes umfasst:
einen Motorraum (20), der in einer Vorn-Hinten-Richtung des Fahrzeugs vor dem Insassenraum (16) vorgesehen ist;
Leistungsquellen, die einen Verbrennungsmotor (21) und einen Elektromotor (MG1, MG2) umfassen;
einen Kraftstofftank (52), der dazu ausgelegt ist, Kraftstoff zu speichern, der dem Verbrennungsmotor (21) zugeführt werden soll;
eine Batterie (50), die dazu ausgelegt ist, elektrische Leistung zu speichern, die dem Elektromotor (MG1, MG2) zugeführt werden soll;
eine Hochspannungskomponente (HVC), die dazu ausgelegt ist, eine Hochspannung aufzunehmen;
ein fahrzeuginternes Ladegerät (40), das dazu ausgelegt ist, die Batterie (50) mit von außerhalb des Plug-in-Hybridelektrofahrzeugs (1) zugeführter Leistung zu laden;
einen Leistungsübertragungsmechanismus (23, 24), der dazu ausgelegt ist, Drehleistung des Verbrennungsmotors (21) und des Elektromotors (MG1, MG2) auf Vorderräder (14) zu übertragen;
einen Wechselrichter (22), der dazu ausgelegt ist, den Elektromotor (MG1, MG2) anzutreiben;
ein Abgasrohr (54), das dazu ausgelegt ist, Abgas vom Verbrennungsmotor (21) in der Vorn-Hinten-Richtung des Fahrzeugs nach hinten zu leiten;
einen Erste-Reihe-Sitz (30), der auf einer Bodenplatte (100) angeordnet ist, die eine Bodenfläche des Insassenraumes (16) bildet;
einen Zweite-Reihe-Sitz (31), der auf einer Bodenplatte (100) so angeordnet ist, dass er in der Vorn-Hinten-Richtung des Fahrzeugs hinter dem Erste-Reihe-Sitz (30) positioniert ist; und
mehrere Querträger (43, 44), die sich in einer Fahrzeugbreitenrichtung erstrecken, wobei
der Verbrennungsmotor (21), der Elektromotor (MG1, MG2), der Leistungsübertragungsmechanismus (23, 24) und der Wechselrichter (22) im Motorraum (20) angeordnet sind,
in der Vorn-Hinten-Richtung des Fahrzeugs der Erste-Reihe-Sitz (30) hinter den Vorderrädern (14) positioniert ist und der Zweite-Reihe-Sitz (31) vor den Hinterrädern (15) positioniert ist,
der Zweite-Reihe-Sitz (31) dazu ausgelegt ist, auf der Bodenplatte (100) in der Vorn-Hinten-Richtung des Fahrzeugs verschiebbar zu sein,
die Batterie (50), der Kraftstofftank (52) und das Abgasrohr (54) unter der Bodenplatte (100) angeordnet sind,
die Hochspannungskomponente (HVC) unter dem Erste-Reihe-Sitz (30) und über der Bodenplatte (100) angeordnet ist, und
zwei der Querträger (43, 44) in der Vorn-Hinten-Richtung des Fahrzeugs vor bzw. hinter der Hochspannungskomponente (HVC) so positioniert sind, dass die Hochspannungskomponenten (HVC) zwischen den zwei Querträgern (43, 44) positioniert sind.

2. Plug-in-Hybridelektrofahrzeug (1) nach Anspruch 1, wobei
die Hochspannungskomponente (HVC) über einen Kabelbaum mit der Batterie (50) verbunden ist, und
die Hochspannungskomponente (HVC) über der Batterie (50) angeordnet ist.

3. Plug-in-Hybridelektrofahrzeug (1) nach Anspruch 2, wobei
die Hochspannungskomponente (HVC) Folgendes umfasst:
einen Anschlusskasten (41), der dazu ausgelegt ist, einen von der Batterie (50) zugeführten Strom zu verteilen;
einen Wandler (42), der dazu ausgelegt ist, eine Spannung der von der Batterie (50) zugeführten elektrischen Leistung umzuwandeln; und
ein fahrzeuginternes Ladegerät (40), und
der Anschlusskasten (41), der Wandler (42) und das fahrzeuginterne Ladegerät (40) in einem in einer Fahrzeugbreitenrichtung angeordneten Zustand über der Batterie (50) und unter dem Erste-Reihe-Sitz (30) angeordnet sind.

4. Plug-in-Hybridelektrofahrzeug (1) nach Anspruch 2, wobei die Hochspannungskomponente (HVC) einen Anschlusskasten (41) umfasst, der dazu ausgelegt ist, einen von der Batterie (50) zugeführten Strom zu verteilen,

5. Plug-in-Hybridelektrofahrzeug (1) nach Anspruch 2, wobei
die Hochspannungskomponente (HVC) einen Wandler (42) umfasst, der dazu ausgelegt ist, eine Spannung der von der Batterie (50) zugeführten elektrischen Leistung umzuwandeln, und
der Wandler (42) über der Batterie (50) angeordnet ist.

6. Plug-in-Hybridelektrofahrzeug (1) nach Anspruch 2, wobei
die Hochspannungskomponente (HVC) ein fahrzeuginternes Ladegerät (40) umfasst, und
das fahrzeuginterne Ladegerät (40) über der Batterie (50) angeordnet ist.

7. Plug-in-Hybridelektrofahrzeug (1) nach Anspruch 3, wobei
das fahrzeuginterne Ladegerät (40) an einer Seite des Anschlusskastens (41) in der Fahrzeugbreitenrichtung angeordnet ist,
der Wandler (42) auf einer Seite des Anschlusskastens (41) angeordnet ist, die dem fahrzeuginternen Ladegerät (40) in der Fahrzeugbreitenrichtung gegenüberliegt, und der Wandler (42) über einen Kabelbaum mit dem Anschlusskasten (41) verbunden ist.

8. Plug-in-Hybridelektrofahrzeug (1) nach Anspruch 1, wobei
die Hochspannungskomponente (HVC) einen Lufteinlass (63) zum Kühlen umfasst, und
der Lufteinlass (63) sich in der Fahrzeugbreitenrichtung nach außen öffnet.

9. Plug-in-Hybridelektrofahrzeug (1) nach Anspruch 7, wobei
das fahrzeuginterne Ladegerät (40) und der Wandler (42) jeweils einen Lufteinlass (63) zum Kühlen umfassen, und
der Lufteinlass (63) des fahrzeuginternen Ladegeräts (40) und der Lufteinlass (63) des Wandlers (42) sich beide in der Fahrzeugbreitenrichtung nach außen öffnen.

## Revendications

1. Véhicule électrique hybride rechargeable (1) de type monospace dans lequel un habitacle (16) et un espace utilitaire ne sont pas séparés par une cloison, le véhicule (1) comprenant :
un compartiment moteur (20) situé devant l'habitacle (16) dans une direction avant-arrière du véhicule ;
des sources d'énergie comportant un moteur thermique (21) et un moteur électrique (MG1, MG2) ;
un réservoir de carburant (52) conçu pour stocker du carburant destiné à alimenter le moteur thermique (21) ;
une batterie (50) conçue pour stocker de l'énergie électrique destinée à alimenter le moteur électrique (MG1, MG2) ;
un composant haute tension (HVC) configuré pour recevoir une tension élevée,
un chargeur embarqué de véhicule (40) conçu pour charger la batterie (50) avec une énergie fournie depuis l'extérieur du véhicule électrique hybride rechargeable (1) ;
un mécanisme de transmission de puissance (23, 24) conçu pour transmettre une puissance de rotation du moteur thermique (21) et du moteur électrique (MG1, MG2) à des roues avant (14) ;
un onduleur (22) conçu pour entraîner le moteur électrique (MG1, MG2) ;
un tuyau d'échappement (54) conçu pour guider les gaz d'échappement du moteur thermique (21) vers l'arrière dans la direction avant-arrière du véhicule ;
un siège de première rangée (30) agencé sur un panneau de plancher (100) qui forme une surface de plancher de l'habitacle (16) ;
un siège de seconde rangée (31) disposé sur le panneau de plancher (100) de manière à être positionné à l'arrière du siège de première rangée (30) dans la direction avant-arrière du véhicule ; et
de multiples éléments transversaux (43, 44) s'étendant dans le sens de la largeur du véhicule
le moteur thermique (21), le moteur électrique (MG1, MG2), le mécanisme de transmission de puissance (23, 24), et l'onduleur (22) étant disposés dans le compartiment moteur (20),
dans la direction avant-arrière du véhicule, le siège de première rangée (30) étant positionné à l'arrière des roues avant (14), et le siège de deuxième rangée (31) étant positionné à l'avant des roues arrière (15),
le siège de deuxième rangée (31) étant configuré pour pouvoir coulisser sur le panneau de plancher (100) dans la direction avant-arrière du véhicule,
la batterie (50), le réservoir de carburant (52) et le tuyau d'échappement (54) étant disposés sous le panneau de plancher (100),
le composant haute tension (HVC) étant disposé sous le siège de première rangée (30) et au-dessus du panneau de plancher (100), et
deux des éléments transversaux (43, 44) étant respectivement positionnés en avant et en arrière du composant haute tension (HVC) dans la direction avant-arrière du véhicule de sorte que les éléments haute tension (HVC) sont positionnés entre les deux éléments transversaux (43, 44).

2. Véhicule électrique hybride rechargeable (1) selon la revendication 1,
le composant haute tension (HVC) étant connecté à la batterie (50) par l'intermédiaire d'un faisceau de câblage, et
le composant haute tension (HVC) étant disposé au-dessus de la batterie (50).

3. Véhicule électrique hybride rechargeable (1) selon la revendication 2,
le composant haute tension (HVC) comprenant :
une boîte de raccordement (41) configurée pour distribuer un courant fourni depuis la batterie (50) ;
un convertisseur (42) conçu pour convertir une tension d'énergie électrique fournie par la batterie (50) ; et
un chargeur embarqué de véhicule (40), et
la boîte de raccordement (41), le convertisseur (42) et le chargeur embarqué de véhicule (40) étant disposés au-dessus de la batterie (50) et sous le siège de première rangée (30) dans un état de montage dans le sens de la largeur du véhicule.

4. Véhicule électrique hybride rechargeable (1) selon la revendication 2, le composant haute tension (HVC) comprenant une boîte de raccordement (41) conçue pour distribuer un courant fourni par la batterie (50).

5. Véhicule électrique hybride rechargeable (1) selon la revendication 2,
le composant haute tension (HVC) comprenant un convertisseur (42) configuré pour convertir une tension d'énergie électrique fournie par la batterie (50), et
le convertisseur (42) étant disposé au-dessus de la batterie (50).

6. Véhicule électrique hybride rechargeable (1) selon la revendication 2,
le composant haute tension (HVC) comprenant un chargeur embarqué de véhicule (40), et
le chargeur embarqué de véhicule (40) étant disposé au-dessus de la batterie (50).

7. Véhicule électrique hybride rechargeable (1) selon la revendication 3,
le chargeur embarqué de véhicule (40) étant disposé d'un côté de la boîte de raccordement (41) dans le sens de la largeur du véhicule,
le convertisseur (42) étant disposé sur un côté de la boîte de raccordement (41) opposé au chargeur embarqué de véhicule (40) dans le sens de la largeur du véhicule, et
le convertisseur (42) étant connecté à la boîte de raccordement (41) par un faisceau de câbles.

8. Véhicule électrique hybride rechargeable (1) selon la revendication 1,
le composant haute tension (HVC) comprenant une entrée d'air (63) pour le refroidissement, et
l'entrée d'air (63) s'ouvrant vers l'extérieur dans le sens de la largeur du véhicule.

9. Véhicule électrique hybride rechargeable (1) selon la revendication 7,
le chargeur embarqué de véhicule (40) et le convertisseur (42) comprenant chacun une entrée d'air (63) pour le refroidissement, et
l'entrée d'air (63) du chargeur embarqué de véhicule (40) et l'entrée d'air (63) du convertisseur (42) s'ouvrant toutes deux vers l'extérieur dans le sens de la largeur du véhicule.
